# EUROPÄISCHE PATENTANMELDUNG

(11) **EP 0 967 431 A1**
(43) Veröffentlichungstag der Anmeldung: **29.12.1999**
(21) Anmeldenummer: 99109464.0
(22) Anmeldetag: 12.05.1999
(51) Int. Cl.: F16N 7/32

(54) **Vorrichtung zur Erzeugung eines feinen Ölnebels**

(30) Priorität: 27.06.1998 DE 29811504 U
(71) Anmelder: Acculube Manufacturing GmbH Schmiermittel und -geräte, 75433 Maulbronn (DE)
(72) Erfinder: Geiss, Artur, 75430 Maulbronn (DE)
(74) Vertreter: Patentanwälte Ostriga & Sonnet

(57) **Zusammenfassung**

Dargestellt und beschrieben ist eine Vorrichtung (10) zur Erzeugung eines feinen Ölnebels, insbesondere zur Schmierung von Werkzeugen bei der Zerspanung, umfassend eine Zerstäuberkammer (11), in die eine Öl und Luft unter Druck führende Zuleitung (14) mündet, eine innerhalb der Zerstäuberkammer (11) angeordnete Zerstäuberdüse (15) am Ende der Zuleitung (14) und eine Ausgangsleitung für den Transport des in der Kammer erzeugten Aerosols zum Ort seiner Applikation. Um eine Verbesserung der Ölnebelerzeugung zu erreichen, ist erfindungsgemäß vorgesehen, daß die Zerstäuberkammer (11) an einer von der Zerstäuberdüse (15) entfernten Stelle eine Verbindung zu einer zweiten Kammer (12) aufweist und daß die Ausgangsleitung (17) in die zweite Kammer hineingeführt ist und sich annähernd über deren gesamte Länge hinwegerstreckt. Hiermit läßt sich ein Ölnebel mit darin äußerst fein und homogen verteilten Ölpartikeln erzeugen.

## Beschreibung

Die Erfindung bezieht sich auf eine Vorrichtung zur Erzeugung eines feinen Ölnebels, insbesondere zur Schmierung von Werkzeugen bei der Zerspanung, umfassend eine Zerstäuberkammer, in die eine Öl und Luft unter Druck führende Zuleitung mündet, eine innerhalb der Zerstäuberkammer angeordnete Zerstäuberdüse am Ende der Zuleitung und eine Ausgangsleitung für den Transport des in der Kammer erzeugten Aerosols zum Ort seiner Applikation.

Die Erfindung richtet sich insbesondere auf eine Vorrichtung, mit der ein wie Rauch erscheinender Ölnebel erzeugt wird, mit dem die sogenannte Minimalschmierung von Werkzeugen und Werkstücken bei der Bearbeitung letzterer geschmiert werden. Ein bevorzugter Anwendungsbereich ist die innere Minimalmengenschmierung durch die Maschinenspindel von Werkzeugmaschinen.

Bei der Applikation derartiger Ölnebel mit minimalster Ölkonzentration ist es besonders wichtig, daß das Öl in der Luft extrem, d.h. mikroskopisch fein verteilt ist. Nur dann kann zuverlässig gewährleistet werden, daß der Ölnebel zur Werkstück- und Werkzeugschmierung ausreicht, sich aber nicht in nachteiliger Weise dort niederschlägt.

Durch offenkundige Vorbenutzung ist eine Vorrichtung nach dem Oberbegriff des Anspruches 1 bekanntgeworden. Sie baut auf einem Öltank auf, in der Weise, daß die Zerstäuberkammer oberhalb eines Öltanks, mittels eines Trennblechs von ihm getrennt, angeordnet ist. An der Unterseite des Öltanks wird Öl von einer Kolbenpumpe gefördert, die Öl und Luft über eine konzentrische Doppelschlauchleitung der über dem Öltank befindlichen Wirbelkammer unter einem Druck von ca. 6-10 bar zugeführt. Im Innern der Wirbelkammer mündet die Leitung in eine Zerstäuberdüse mit ca. 1,8 mm Düsen-⌀. Das unter Einfluß des hohen Luftdrucks zerstäubte Öl gelangt als Nebel in eine in die Wirbelkammer mündende Ausgangsleitung und wird über Schlauchund/oder Rohrleitungen dem Ort der Applikation, insbesondere an das Werkzeug einer Werkzeugmaschine, zugeführt.

Das zwischen dem Öltank und der Wirbelkammer angeordnete Trennblech schließt nicht dicht mit der Wandung des Systems ab, so daß sich in der Wirbelkammer niedergeschlagene Tropfen oder ein Ölfilm zur weiteren Verwendung im darunter befindlichen Öltank wieder sammeln können.

Mit der bekannten Vorrichtung läßt sich ein sehr feiner Ölnebel unter sparsamer Verwendung von Öl erzeugen, der für zahlreiche Anwendungsfälle durchaus akzeptabel ist.

Die vorliegende Erfindung strebt jedoch eine weitere Verbesserung der Ölnebelerzeugung in der Weise an, daß sich mit noch höherer Sicherheit und Zuverlässigkeit ein Ölnebel mit darin äußerst fein und homogen verteilten Ölpartikeln erzeugen läßt.

Die Erfindung löst diese Aufgabe im wesentlichen mit den Merkmalen des Anspruches 1 und ist dementsprechend dadurch gekennzeichnet, daß die Zerstäuberkammer an einer von der Zerstäuberdüse entfernten Stelle eine Verbindung zu einer zweiten Kammer aufweist und daß die Ausgangsleitung in die zweite Kammer hineingeführt ist und sich annähernd über deren gesamte Länge hinwegerstreckt.

Zweckmäßige Weiterbildungen des Erfindungsgegenstandes und weitere vorteilhafte Ausführungsformen sind in den Unteransprüchen angegeben.

Das wesentliche Prinzip der Erfindung besteht darin, den in der Zerstäuberkammer erzeugten Ölnebel durch eine zweite Kammer zu schicken, in der die Möglichkeit besteht, daß die in der Zerstäuberkammer erzeugten kleinen Ölpartikel noch weiter aufgespalten, d.h. in ihrer Größe verringert werden und daß unerwünscht große Ölpartikel während der Aufbereitung des Ölnebels mit hoher Zuverlässigkeit ausgeschieden werden.

Um dies zu erreichen, stellt die zweite, stromabwärts der Zerstäuberkammer zugeordnete Kammer sicher, daß der in der Zerstäuberkammer erzeugte Ölnebel nicht sofort in die Ausgangsleitung eintritt, sondern zunächst die zweite Kammer durchlaufen muß. Nur kleine, insbesondere schwebefähige Ölpartikel können auf diese Weise in die Ausgangsleitung eintreten, wohingegen sich schwerere Partikel in der zweiten Kammer sammeln oder sich an deren Wänden niederschlagen.

Die der Erfindung entsprechende Vorrichtung läßt sich außerdem besonders kompakt bauen, womit ein zusätzlicher Vorteil erzielt ist. Insbesondere ist die Vorrichtung zur Erzeugung des feinen Ölnebels nicht in körperlich fester Zuordnung zu einem Öltank und an dessen Dimensionen gebunden, sondern als selbständige Einheit der Gesamtvorrichtung, die außer dem Öltank oder Ölvorratsbehälter die zur Druckerzeugung erforderliche Pumpe sowie die zugehörigen Schlauch- und/oder Rohrleitungen sowie ein Apparategehäuse umfaßt.

Im übrigen versteht sich die Erfindung am besten anhand der nachfolgenden detaillierten Erläuterung eines in der anliegenden Zeichnung dargestellten Ausführungsbeispiels.

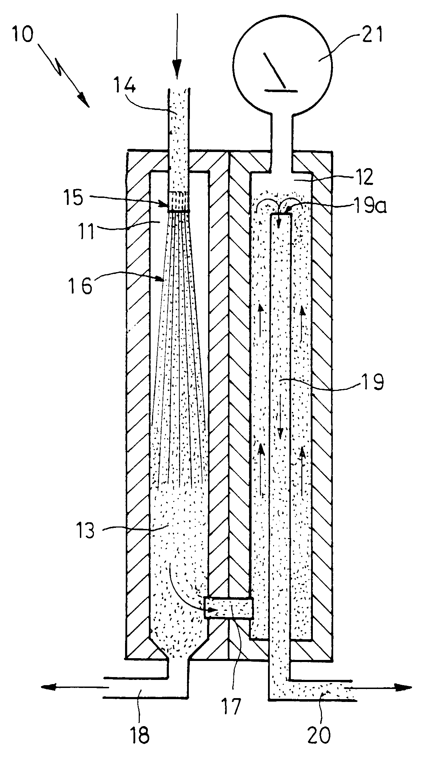

Die Zeichnung zeigt einen Längsschnitt durch die Vorrichtung zur Erzeugung eines feinen Ölnebels und ihrer wesentlichen Teile in etwa natürlichem Maßstab.

Die insgesamt mit 10 bezeichnete Vorrichtung umfaßt eine erste Kammer 11 und eine fluidleitend damit verbundene zweite Kammer 12. Beide Kammern 11 und 12 sind langgestreckt und weisen jeweils einen in Relation zu ihrer Länge relativ kleinen Querschnitt auf.

Die erste Kammer 11 - im nachfolgendes "Zerstäuberkammer" genannt - dient der Erzeugung eines Ölnebels 13. An der in der Zeichnung oberen Stirnseite der Zerstäuberkammer 11 mündet eine mit 14 bezeichnete Zuleitung, die Öl in geringer Menge und Luft in großer Menge unter einem relativ hohen Druck von ca. 6-10 bar führt.

Das nicht dargestellte Ende der Zuleitung 14 steht mit einer Pumpe, z.B. einer frequenz- und hubgesteuerten Kolbenpumpe, in Verbindung, die Luft fördert sowie Öl aus einem ebenfalls nicht dargestellten Ölvorratsbehälter.

Das wie ersichtlich in die Zerstäuberkammer 11 mündende Ende der Zuleitung 14 umfaßt eine Zerstäuberdüse 15. Entsprechend einem bevorzugten Ausführungsbeispiel weist diese Zerstäuberdüse 15 eine Vielzahl von Austrittsöffnungen bzw. Austrittskanälen - z.B. sechs - sehr geringen Durchmessers auf.

Mit den in der Zeichnung von Punkten durchsetzten Schar von Linien soll der unter Druck aus der Zerstäuberdüse 15 austretende Strahl 16 bezeichnet sein, der sich aus Luft und Öl zusammensetzt, wobei die herausgepreßte Luft das Öl in möglichst kleine Partikel spaltet, bis im unteren Bereich der Vorrichtung der mit 13 bezeichnete Ölnebel vorliegt.

Wie bereits kurz erwähnt, ist die Zerstäuberkammer 11 mit der zweiten Kammer 12 verbunden. Diese Verbindung, z.B. in Form eines Röhrchens oder zweier miteinander fluchtenden Bohrungen in den Kammerwandungen, ist in der Zeichnung mit 17 bezeichnet. Diese Verbindung 17 befindet sich nahe an, jedoch vor dem unteren Ende der Zerstäuberkammer 11. Damit wird erreicht, daß das feinste Ölpartikel beinhaltende Aerosol aus der Zerstäuberkammer 11 über die Verbindung 17 in die zweite Kammer 12 eintreten kann - was durch den gekrümmten Pfeil angedeutet ist - während sich Ölpartikel, die für einen solchen Transport zu schwer sind oder an den Wandungen der Zerstäuberkammer 11 anhaftendes Öl weiter nach unten zum Boden der Zerstäuberkammer 11 hin absetzen kann, in den eine Ölsammelleitung 18 mündet.

Die Ölsammelleitung 18 dient zugleich als Rückführleitung für abgeschiedenes Öl in den nicht dargestellten Ölvorratsbehälter, aus dem das in die Zuleitung 14 zu fördernde Öl bevorratet wird.

In die zweite Kammer 12 taucht das z.B. als Röhrchen ausgeführte Ende einer Ausgangsleitung 19 ein, die dazu dient, das in ihr geführte Aerosol 20 der Stelle der Applikation zuzuführen.

Wie die Zeichnung weiterhin zeigt, durchgreift die Ausgangsleitung 19 die zweite Kammer 12 fast der gesamten Länge nach. Dadurch wird erreicht, daß der Ölnebel 13 ebenfalls den Weg über die zweite Kammer 12 nehmen muß, ehe er in die mit 19a bezeichneten Mündung der Ausgangsleitung 19 eintreten kann. Damit wird gewährleistet, daß nochmals eine Selektion zwischen sehr leichten Ölschwebeteilchen und schwereren Ölpartikeln erfolgt und nur allerkleinste Ölpartikel innerhalb des Ölnebels über die Ausgangsleitung 19 dem Werkstück bzw. Werkzeug zugeführt werden können. Schwerere Teilchen oder solche, die bei der Bewegung des Ölnebels 13 durch die zweite Kammer 12 hindurch keine weitere Aufspaltung mehr erfahren haben, können sich an den Wänden der zweiten Kammer 12 niederschlagen oder sich an deren Boden ansammeln und letztlich über die Verbindung 17 in die Ölsammel- bzw. Ölrückführleitung 18 zurück gelangen.

Wie die Darstellung des Ausführungsbeispiels weiterhin zeigt, erstreckt sich die Ausgangsleitung 19 innerhalb der zweiten Kammer 12 in deren Längsrichtung, und zwar zentral in der Kammermitte. Daraus resultiert der Vorteil, daß der die zweite Kammer 12 transportierte Ölnebel mit beachtlichen Flächen in Berührung gelangen kann, die von der Innenwand der Kammer 12 und dem Außenmantel der Leitung 19 gebildet werden, so daß die Wahrscheinlichkeit, daß größere Ölpartikel hier anhaften bleiben, erhöht wird.

Der Vollständigkeit halber sei erwähnt, daß an die zweite Kammer 12 noch ein Manometer 21 angeschlossen ist, welches durch Überwachung des Betriebsdrucks eine Kontrolle über den ordnungsgemäßen Betrieb oder Störungen der Vorrichtung gestattet.

Wie die Figur weiterhin veranschaulicht, sind die beiden Kammern 11 und 12 gleich groß und unmittelbar nebeneinander blockartig zu einer kompakten Einheit verbunden.

Die bevorzugte Betriebslage der dargestellten Vorrichtung entspricht der Zeichnung, d.h., Öl und Luft münden von oben her in die Zerstäuberkammer 11 ein, und der über die Verbindung 17 von der Zerstäuberkammer 11 in die zweite Kammer 12 eintretende Ölnebel 13 steigt in der zweiten Kammer 12 von unten nach oben, so daß in gewissem Umfange auch die Schwerkraft einen positiven Einfluß auf die Erzeugung höchst fein verteilten Öles im Ölnebel innerhalb der Kammer 12 ausüben kann.

Es sei jedoch darauf hingewiesen, daß die Vorrichtung auch dann zufriedenstellend arbeitet, wenn sie statt - wie dargestellt senkrecht - horizontal betrieben wird, insbesondere in der Weise, daß die Zerstäuberkammer 11 unterhalb der zweiten Kammer 12 angeordnet ist. Um in einem solchen Fall eine sichere Ölabscheidung aus der Zerstäuberkammer 11 zu erhalten, wird dann allerdings die Ölsammelleitung 18 nicht an der schmalen Stirnseite der Zerstäuberkammer 11, sondern an deren Boden anzuordnen sein, der dann von einer Längswand definiert ist.

## Patentansprüche

1. Vorrichtung zur Erzeugung eines feinen Ölnebels, insbesondere zur Schmierung von Werkzeugen bei der Zerspanung, umfassend eine Zerstäuberkammer, in die eine Öl und Luft unter Druck führende Zuleitung mündet, eine innerhalb der Zerstäuberkammer angeordnete Zerstäuberdüse am Ende der Zuleitung und eine Ausgangsleitung für den Transport des in der Kammer erzeugten Aerosols zum Ort seiner Applikation, dadurch gekennzeichnet, daß die Zerstäuberkammer (11) an einer von der Zerstäuberdüse (15) entfernten Stelle eine Verbindung (17) zu einer zweiten Kammer (12) aufweist und daß die Ausgangsleitung (19) in die zweite Kammer (12) hineingeführt ist und sich annähernd über deren gesamte Länge hinwegerstreckt.

2. Vorrichtung nach Anspruch 1, dadurch gekennzeichnet, daß die Zerstäuberkammer (11) einen im Verhältnis zu ihrer Länge kleinen Querschnitt aufweist, daß die Zuleitung (14) im wesentlichen in Längsrichtung der Zerstäuberkammer (11) in diese mündet und daß die Verbindung (17) mit der zweiten Kammer (12) nahe dem der Zerstäuberdüse (14) entfernten Ende der Zerstäuberkammer (11) angeordnet ist.

3. Vorrichtung nach Anspruch 1 oder 2, dadurch gekennzeichnet, daß an der Unterseite der Zerstäuberkammer (11) eine Ölsammelleitung (18) angeschlossen ist.

4. Vorrichtung nach einem der vorangegangenen Ansprüche, dadurch gekennzeichnet, daß die zweite Kammer (12) parallel zu der Zerstäuberkammer (11) neben dieser angeordnet ist und daß sich die Ausgangsleitung (19) vom Ende der zweiten Kammer (12) in Richtung zu der Seite erstreckt, an der die Zuleitung (14) in die Zerstäuberkammer (11) mündet.

5. Vorrichtung nach einem der vorangegangenen Ansprüche, dadurch gekennzeichnet, daß die Zuleitung (14) in die Zerstäuberkammer (11) einerseits und die Ausgangsleitung (19) in der zweiten Kammer (12) andererseits im wesentlichen in der Längsmitte der jeweiligen Kammer (11; 12) angeordnet sind.

6. Vorrichtung nach Anspruch 1 oder einem der darauf folgenden, dadurch gekennzeichnet, daß die Verbindung (17) zwischen den beiden Kammern (11; 12) miteinander fluchtende Bohrungen in angrenzenden Kammerwänden umfaßt.

7. Vorrichtung Anspruch 6, dadurch gekennzeichnet, daß die beiden Kammern (11; 12) im wesentlichen von gleicher Größe sind und deckungsgleich neben- bzw. übereinander liegend zu einer kompakten Gesamtvorrichtung (10) zusammengefaßt sind.

8. Vorrichtung nach Anspruch 1 oder einem der auf ihn folgenden, daß die Zerstäuberdüse (15) eine Mehrzahl kleinstguerschnittiger Düsensöffnungen aufweist.
